# FASCICULE DE BREVET EUROPEEN

(11) **EP 3 649 017 B1**
(45) Date de publication et mention de la délivrance du brevet: **10.11.2021**
(21) Numéro de dépôt: 18752536.5
(22) Date de dépôt: 28.06.2018
(51) Int. Cl.: B60R 11/02, B32B 7/04, B60R 13/01

(54) **AGENCEMENT D'UN PANNEAU DE COFFRE DANS UN COFFRE DE VÉHICULE AUTOMOBILE**
ANORDNUNG EINER GEPÄCKRAUMPLATTE IN EINEM KOFFERRAUM EINES KRAFTFAHRZEUGS
MOTOR VEHICLE WITH A REMOVABLE BOOT PANEL

(30) Priorité: 05.07.2017 FR 1756345
(43) Date de publication de la demande: 13.05.2020
(73) Titulaire: PSA Automobiles SA, 78300 Poissy (FR); Faurecia Automotive Industrie, 92000 Nanterre (FR)
(72) Inventeur: BERLIOZ, Emeline, 92370 Chaville (FR); MARCQ, Philippe, 08210 Mouzon (FR); FORGET, Johnny, 08210 Mouzon (FR)
(74) Mandataire: Ménès, Catherine
(86) Numéro de dépôt international: PCT/FR2018/051576
(87) Numéro de publication internationale: WO 2019/008250

(56) Documents cités:
- EP-A1- 1 130 943
- WO-A2-2010/036528
- JP-A- H09 175 282
- JP-A- 2005 067 257
- US-A- 4 696 369
- US-A- 5 731 551

## Description

L'invention se rapporte au domaine des agencements de panneaux de coffre dans les coffres de véhicules automobiles et concerne plus particulièrement un agencement d'un panneau de coffre recouvrant un transducteur acoustique disposé sous le plancher de coffre d'un véhicule automobile.

De tels panneaux de coffre sont également désignés par le terme « faux-plancher ».

Le transducteur acoustique est notamment un subwoofer disposé dans un logement ménagé sous le plancher de coffre.

Un subwoofer est un haut-parleur destiné à la reproduction des fréquences sonores les plus basses du spectre audio.

Le terme subwoofer désigne également l'enceinte acoustique dans laquelle un tel haut-parleur est monté, appelé également « caisson de grave ou de basses ».

Il est connu notamment du document DE202013105629A, un agencement d'un caisson de basse disposé à proximité d'une cuvette de roue de secours. Le document US4696369A décrit un véhicule comportant un haut-parleur dans un renfoncement situé dans le plancher du coffre d'un véhicule. Le document WO2010036528A montre un véhicule automobile selon le préambule de la revendication 1 et un panneau de coffre selon le préambule de la revendication 2.

Une cuvette de roue de secours se présente généralement sous la forme d'une cavité obtenue par emboutissage de la tôle du plancher de coffre. Son ouverture débouche dans le coffre. Une telle cuvette est généralement destinée à recevoir une roue de secours et l'outil de montage/démontage de roue associé.

La roue de secours est parfois remplacée par un kit de réparation, ce qui laisse un volume de rangement disponible pour y loger notamment un caisson de basse.

Il est également connu de recouvrir la cuvette de roue de secours d'un faux-plancher constitué d'une plaque, ou panneau de coffre, pouvant être amovible ou partiellement amovible par rapport au plancher du coffre.

Le faux-plancher peut recouvrir partiellement ou la totalité du plancher de coffre, c'est pourquoi il est désigné par le terme de « faux-plancher ». Il constitue ainsi le fond du coffre du véhicule en étant apte à recevoir et supporter les bagages et autres objets habituellement chargés dans un coffre de véhicule automobile.

Il s'étend à partir de l'arrière des sièges de rang 2 (dernière rangée de sièges du véhicule) jusqu'à la paroi verticale arrière du coffre. Sa découpe extérieure correspond sensiblement au contour intérieur du fond du coffre.

On accède à la roue de secours après avoir soulevé le panneau de coffre.

Il comporte généralement, sur son bord orienté vers la paroi verticale arrière du coffre, une poignée, cordon, ou autre moyen de préhension permettant d'écarter le faux-plancher du plancher de coffre.

Il doit être suffisamment rigide et résistant pour être capable d'une part, de supporter la charge et, d'autre part, pour ne pas ployer sous la charge au risque d'endommager le contenu de la cuvette. Il doit en outre être plat pour permettre de charger et déplacer les objets dans le coffre sans difficulté.

Un faux-plancher est généralement constitué au minimum d'une plaque de bois recouverte d'une plaque de revêtement en matériau textile (moquette) et d'une plaque d'insonorisation.

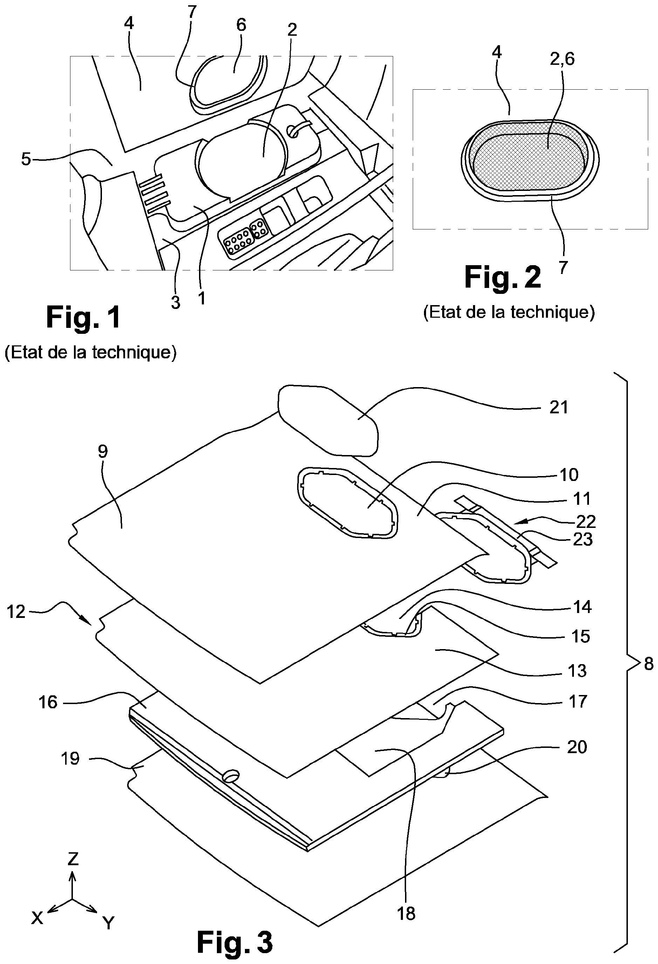

Dans un autre agencement connu, tel qu'illustré aux figures 1 et 2, le caisson de basse 1 comporte un boitier de forme générale parallélépipédique contenant une cavité ouverte dans laquelle est logé un transducteur acoustique, ici un haut-parleur à membrane centrale, pour restituer le son généré par un système audio du véhicule non représenté.

La membrane du haut-parleur qui est ainsi exposée, est recouverte par une grille de protection 2 fixée sur le boitier du caisson 1.

Le caisson de basse 1 est logé dans une cuvette 3 située sous le plancher de coffre 5 et le fond du boitier du caisson 1 repose sur le fond de la cuvette 3. La membrane du haut-parleur est orientée vers l'extérieur de la cuvette 3, c'est-à-dire vers le faux-plancher 4 représenté en étant soulevé du plancher de coffre 5 sur la figure 1.

Pour laisser passer le son du caisson de basse 1 à travers le faux-plancher 4, une ouverture 6 est ménagée dans le faux-plancher 4 au droit de la grille 2 fixée sur le caisson de basse 1 et dont les formes et dimensions correspondent à celles de la grille 2.

L'ouverture 6 et la grille 2 peuvent prendre différentes formes : rectangulaire, circulaire, oblongue comme dans cet agencement, etc.

Tel qu'illustré à la figure 2, représentant le faux-plancher 4 en vue de dessus, rabattu sur le plancher 5 de coffre, la grille 2 coïncide avec l'ouverture 6 du faux-plancher 4 en affleurant le plan de l'ouverture 6.

En effet, la grille 2 ne doit pas dépasser de l'ouverture 6 à l'intérieur du coffre, au risque d'être détériorée par les charges embarquées (déformation, arrachement) dans le coffre et/ou d'entraver leur chargement.

Une pièce de finition en plastique 7 est disposée dans l'ouverture 6 et elle est conformée de manière à épouser le contour de l'ouverture 6 et prendre en sandwich l'épaisseur de la plaque ou panneau du faux-plancher en affleurant la couche de moquette de la plaque afin de limiter les risques d'arrachement. Cet affleurement est obtenu par une technique dit de soyage appliquée à un faux-plancher obtenu par thermoformage.

Le soyage est un terme désignant une opération de double-pliage d'une tôle plane, qui aboutit à deux plans parallèles décalés d'une distance du même ordre de grandeur que l'épaisseur de la tôle.

Par extension de langage, on généralise cette expression à des assemblages entre deux plaques réalisées dans différents types de matériaux se prêtant à déformation ; déformation obtenue notamment par thermoformage.

Un tel agencement nécessite donc l'utilisation de produits thermoformés pour gérer le soyage et l'outillage associé, ce qui représente un surcoût non négligeable dans le prix de revient après fabrication du faux-plancher.

D'autre part, cet agencement présente un inconvénient en termes d'entrée d'eau ; le haut-parleur étant directement exposé aux entrées d'eau provenant du coffre notamment à l'ouverture du coffre soit directement soit par ruissèlement des eaux de pluie ou de lavage. Le risque d'arrachement est diminué.

Dans l'invention, on résout ces problèmes par l'adoption d'un véhicule automobile selon la revendication 1, comportant un panneau de coffre, amovible, supporté par le plancher d'un coffre de véhicule automobile dans lequel le plancher comporte une cuvette ménagée sous le plancher dont l'ouverture, affleurant le plancher, débouche dans le coffre, ladite cuvette contenant un haut-parleur dont la membrane, s'étendant parallèlement au plan de l'ouverture de la cuvette, est orientée vers l'ouverture de la cuvette en affleurant ladite ouverture, dans lequel ledit panneau recouvre l'ouverture de la cuvette, et dans lequel une grille de protection est aménagée pour protéger ladite membrane, le panneau comportant au moins une ouverture s'étendant dans le plan du panneau pour laisser passer le son au travers du panneau, et un ensemble de grille de protection intégré dans le panneau fermant l'ouverture ménagée dans le panneau.

Selon l'invention, la membrane du haut-parleur est disposée au voisinage d'un bord de la cuvette, et l'ouverture grillagée, ménagée dans le panneau, est disposée entre le bord du panneau, adjacent au bord de la cuvette, et la membrane du haut-parleur.

Selon l'invention, l'ouverture grillagée, ménagée dans le panneau, est en regard de la membrane du haut-parleur avec un décalage déterminé.

Selon l'invention, l'ensemble de grille comporte une grille et une contre-grille en regard l'une de l'autre, et en ce que le bord extérieur de la contre-grille est rigide et fait office de renfort du bord du panneau.

L'invention porte également sur un panneau de coffre selon la revendication 2 d'un agencement tel que décrit ci-dessus, comportant un empilement de plaques assemblées les unes sur les autres, comportant, en partant de la plaque supérieure vers la plaque inférieure :
- une plaque en matériau textile présentant une ouverture au voisinage d'un de ses bords latéraux ;
- un ensemble de plaques de bois comportant une première plaque de bois comportant une échancrure en regard de l'ouverture de la plaque en matériau textile ; ladite échancrure étant ouverte sur ledit bord latéral, et comportant une deuxième plaque de renfort en bois entourant l'échancrure ;
- une plaque en matériau insonorisant comportant une échancrure en regard de l'ouverture de la plaque en matériau textile en étant ouverte sur ledit bord latéral, et présentant une empreinte correspondant à l'encombrement de la plaque de renfort pour compenser la surépaisseur due à la plaque de renfort dans l'empilement ; et
- une plaque en matériau non tissé présentant une ouverture, en regard de l'ouverture de la plaque en matériau textile, au voisinage dudit bord latéral ;
et comportant un ensemble de grille comportant une grille et une contre-grille prenant en sandwich ledit bord latéral de la plaque en matériau textile et l'ensemble de plaques de bois ; la grille étant rapportée sur la contre-grille et maintenue par des moyens de clipage ; la contre-grille fermant l'échancrure de l'ensemble de plaques de bois sur ledit bord latéral pour assurer la rigidité sur ledit bord qui est dépourvu de bois et assurer le soyage ; lesdits moyens de clipage assurant la tenue mécanique de l'ensemble et le marquage du soyage dans la plaque en matériau textile.

L'invention porte également sur un premier procédé d'assemblage d'un panneau de coffre selon la revendication 3 d'un ensemble tel que décrit ci-dessus, comportant les étapes suivantes :
- encollage de la face inférieure de la plaque textile ;
- encollage de la face supérieure de la plaque en matériau insonorisant ;
- pressage de l'empilement constitué, dans l'ordre, de la plaque en matériau non tissé, de la plaque en matériau insonorisant encollée, des plaques de bois et de la plaque textile encollée, et découpe simultanée des contours des plaques en matériau non tissé et textile ainsi que l'ouverture dans la plaque de matériau textile ; et
- assemblage de la grille sur la contre-grille par clipage.

L'invention porte encore sur un deuxième procédé d'assemblage d'un panneau de coffre d'un ensemble tel que décrit ci-dessus, comportant les étapes suivantes :
- encollage de la face supérieure de l'ensemble de plaques de bois ;
- compression de la face supérieure de l'ensemble de plaques de bois sur la plaque de textile avec marquage du soyage de la grille ;
- encollage de la face inférieure de l'ensemble formé par les plaques de bois et la plaque textile ; la face inférieure correspondant à la face inférieure de l'ensemble de plaques de bois ;
- positionnement de la plaque en matériau insonorisant sur la face inférieure de l'ensemble de plaques de bois encollée ;
- pressage de la plaque en matériau non tissé sur l'empilement de plaques précédent, et découpe simultanée des contours des plaques en matériau non tissé et textile ainsi que l'ouverture dans la plaque de matériau textile ; et
- assemblage de la grille sur la contre-grille par clipage.

L'invention est décrite plus en détail ci-après et en référence aux figures représentant schématiquement l'agencement dans son mode de réalisation préférentiel.
- les figures 1 et 2, déjà décrites, présentent un agencement connu d'un panneau de coffre recouvrant un caisson de basse logé dans une cuvette ménagée sous le plancher de coffre d'un véhicule ;
- la figure 3 présente un panneau de coffre de l'agencement selon l'invention, suivant une vue éclatée de dessus, permettant de distinguer les différents éléments constitutifs du panneau ;
- les figures 4A et 4B illustrent respectivement l'ensemble de plaques de bois suivant une vue de dessus et une vue de dessous ;
- la figure 5 illustre une demi-coupe partielle du panneau de coffre considérée dans le plan médian de l'ouverture ; et
- La figure 6 illustre un agencement d'un panneau de coffre selon l'invention, suivant une vue en coupe partielle dans le plan médian du véhicule.

Sur les figures 3, 5 et 6, on utilise un référentiel tridimensionnel XYZ habituellement utilisé dans le domaine automobile pour l'orientation des vues ou dessins.

Dans la suite de la description, on utilise les termes « inférieur », « intérieur » respectivement « supérieur », « extérieur » en considérant le faux-plancher tel qu'il se présente dans l'environnement du véhicule.

Comme illustré à la figure 3, le panneau de coffre 8 comporte un empilement de plaques assemblées les unes sur les autres, comportant, en partant de la plaque supérieure 9 vers la plaque inférieure (de base) 18 :
- une plaque 9 en matériau textile présentant une ouverture 10 au voisinage d'un 11 de ses bords latéraux ;
- un ensemble 12 de plaques de bois comportant une première plaque de bois 13 comportant une échancrure 14 en regard de l'ouverture 10 de la plaque 9 en matériau textile ; ladite échancrure 14 étant ouverte sur ledit bord latéral 11, et comportant une deuxième plaque de renfort en bois 15 entourant l'échancrure 14 ;
- une plaque 16 en matériau insonorisant comportant une échancrure 17 en regard de l'ouverture 10 de la plaque 9 en matériau textile en étant ouverte sur ledit bord latéral 11, et présentant une empreinte 18 correspondant à l'encombrement de la plaque de renfort 15 pour compenser la surépaisseur due à la plaque de renfort 15 dans l'empilement ; et
- une plaque 19 en matériau non tissé présentant une ouverture 20, en regard de l'ouverture 10 de la plaque 9 en matériau textile, au voisinage dudit bord latéral 11.

Le panneau de coffre 8 comporte en outre un ensemble de grille comportant une grille 21 et une contre-grille 22, disposées en regard l'une de l'autre, prenant en sandwich ledit bord 11 de la plaque en matériau textile 9 et l'ensemble 12 de plaques de bois 13 et 15. La contre-grille 22 comporte un bord droit extérieur rigide 23 qui tangente le bord 11.

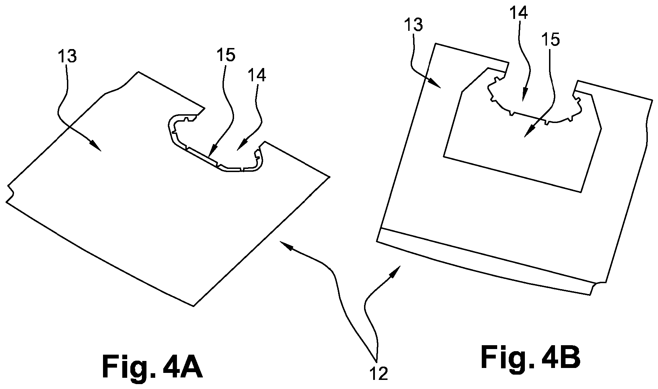

Les figures 4A et 4B illustrent respectivement l'ensemble 12 de plaques de bois 13 et 15 suivant une vue de dessus et une vue de dessous.

La plaque 15 fait office d'insert de renfort de la plaque 13 autour de l'échancrure 14 en débordant à l'intérieur de l'échancrure 14.

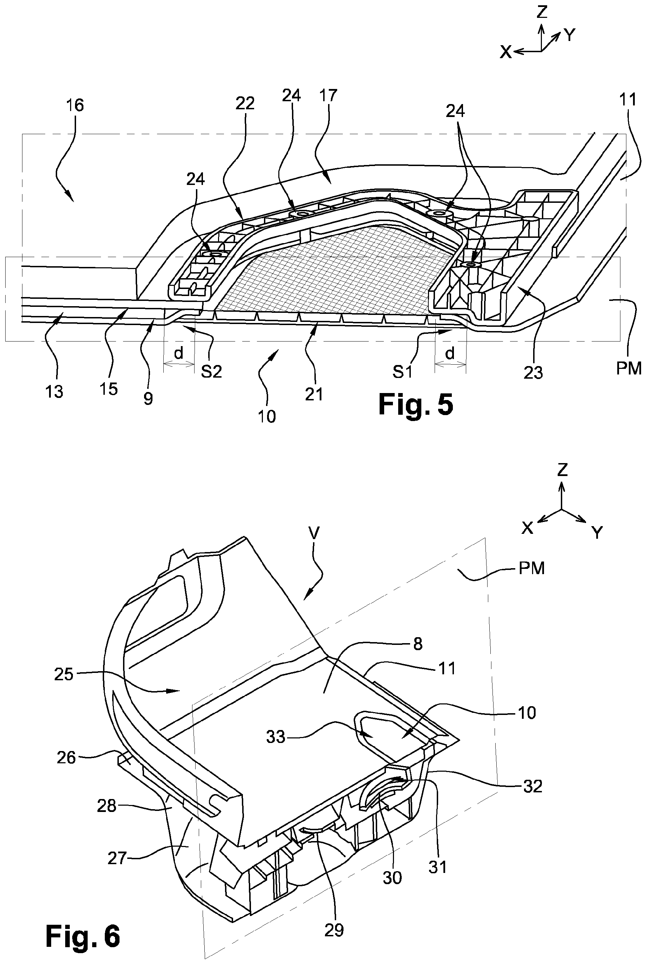

La figure 5 illustre une demi-coupe partielle du panneau de coffre 8 considérée dans le plan médian PM de l'ouverture 10.

La grille 21 est rapportée sur la contre-grille 22 et est maintenue par des moyens de clipage 24 (quatre des huit moyens de clipage 24 sont représentés dans l'exemple de de la figure 5).

Le bord droit extérieur rigide 23 de la contre-grille 22 ferme l'échancrure 14 de l'ensemble 12 de plaques de bois 13 et 15 pour assurer la rigidité sur le bord 11 de la plaque 9 en matériau textile qui est dépourvu de bois donc de renfort. La plaque 9 en matériau textile déborde sur l'ouverture 10 et l'échancrure 17.

Le bord droit extérieur rigide 23 de la contre-grille 22, permet en plus d'assurer la rigidité du bord 11, d'assurer le soyage S1 sur la partie périphérique extérieure de l'ouverture 10 (partie en regard du bord 11).

Le soyage S2, sur la partie périphérique intérieure de l'ouverture 10, à l'opposé du bord 11 par rapport à la grille 21, est assuré avantageusement par la superposition (par exemple par collage) des deux plaques de bois 13 et 15 avec un décalage « d » entre les deux plaques 13 et 15 dans le plan de l'échancrure 14. Cet agencement permet de réaliser la fonction de soyage à moindre coût.

On retrouve ce même décalage « d » pour le soyage S1 ; la superposition des deux plaques de bois 13 et 15 pour le soyage S2, étant remplacée par la section du profil transversal du bord de la contre-grille 22 qui présente une marche entre la face extérieure du bord 23 et la face intérieure du bord 23.

Les moyens de clipage 24 assurent la tenue mécanique de l'ensemble et le marquage du soyage dans la plaque 9 en matériau textile. La plaque 19 n'est pas représentée.

Dans un premier exemple, un procédé d'assemblage d'un panneau de coffre 8 selon l'invention comporte les étapes suivantes :
- encollage de la face inférieure de la plaque textile 9 ;
- encollage de la face supérieure de la plaque en matériau insonorisant 16 ;
- pressage de l'empilement constitué, dans l'ordre, de la plaque en matériau non tissé 19, de la plaque en matériau insonorisant encollée 16, des plaques de bois 13 et 15 et de la plaque textile encollée 9 et découpe simultanée des contours des plaques en matériau non tissé 19 et textile 9 ainsi que l'ouverture 10 dans la plaque de matériau textile 9 ; et
- assemblage de la grille 21 sur la contre-grille 22 par clipage.

Dans un deuxième exemple, un procédé d'assemblage d'un panneau de coffre 8 selon l'invention comporte les étapes suivantes :
- encollage de la face supérieure de l'ensemble 12 de plaques de bois 13 et 15 ;
- compression de la face supérieure de l'ensemble 12 de plaques de bois 13 et 15 sur la plaque de textile 9 avec marquage du soyage de l'ensemble de grille 21 et 22 ;
- encollage de la face inférieure de l'ensemble 12 formé par les plaques de bois 13 et 15 et la plaque textile 9 ; la face inférieure de l'ensemble 12 et 9 correspondant à la face inférieure de l'ensemble 12 de plaques de bois ;
- positionnement de la plaque en matériau insonorisant 16 sur la face inférieure de l'ensemble 12 de plaques de bois encollée ;
- pressage de la plaque en matériau non tissé 19 sur l'empilement de plaques précédent et découpe simultanée des contours des plaques en matériau non tissé 19 et textile 9 ainsi que l'ouverture 10 dans la plaque de matériau textile 9 ; et
- assemblage de la grille 21 sur la contre-grille 22 par clipage.

D'autres exemples de procédés d'assemblage sont possibles.

La figure 6 illustre un agencement d'un panneau de coffre 8 tel que décrit ci-dessus dans un coffre 25 d'un véhicule automobile V suivant une vue en coupe partielle dans le plan médian PM du véhicule V.

Le panneau de coffre 8 est supporté par le plancher 26 du coffre 25. Le coffre 25 comporte une cuvette 27 ménagée sous le plancher 26 dont l'ouverture 28 débouche dans le coffre 25 en affleurant le plancher 24.

L'ouverture 28 communique avec l'intérieur du coffre 25.

La cuvette 27 contient un caisson de basse 29 comportant un haut-parleur 30 dont la membrane centrale 31, s'étend parallèlement au plan de l'ouverture 28, et est orientée vers l'ouverture 28 de la cuvette 27 en affleurant l'ouverture 28 de la cuvette 27.

Le haut-parleur 30 est disposé au voisinage de la paroi intérieure 32 de la cuvette 27, paroi 32 qui se trouve sensiblement à l'aplomb de la rangée de sièges arrière (sièges de second rang) non représentée.

Le panneau de coffre 8 recouvre l'ouverture 28 de la cuvette 27 et son contour extérieur correspond sensiblement au contour interne du plancher 26 de coffre 25.

L'ouverture 10, 20 est ménagée dans le panneau 8 recevant l'ensemble de grille de protection 21, 22. L'ouverture grillagée 33 est aménagée pour protéger la membrane 31, tout en permettant la propagation du son dans le coffre 25.

Elle est disposée dans le plan du panneau 8, entre le bord extérieur 11 du panneau 8, et l'aplomb du bord de la membrane 31 du haut-parleur 30 qui est adjacent à la paroi 32 de la cuvette 27.

L'ouverture grillagée 33 présente donc un décalage déterminé avec la membrane 31 du haut-parleur 30, décalage qui sans entraver la propagation du son dans le coffre 25 permet de limiter les ruissellements d'eau dans le caisson de basse 29.

A titre d'exemple, les plaques de bois 13 et 15 sont réalisées à partir de fibres de bois et d'un liant synthétique, connus sous l'acronyme MDF (Médium Density Fiberboard) d'épaisseur de 4 à 5 mm.

La plaque en matériau non tissé 19 est constituée d'un matériau textile de couleur noire dont les fibres sont maintenues de façon aléatoire par compression.

La grille 20 et la contre-grille 22 sont réalisées dans un polymère thermoplastique de type ABS (Acrylonitrile Butadiène Styrène)

La plaque d'insonorisation 16 est réalisée à base d'un feutre ou d'une mousse à cellules ouvertes, d'épaisseur de l'ordre de 15 mm (épaisseur de feutre possible entre 10 et 30 mm environ)

La plaque en matériau textile 9 est par exemple une moquette aiguilletée polypropylène ou velours tufté polypropylène ou polyamide, une moquette DilourPolyester, etc.

## Revendications

1. Véhicule automobile (V) comportant un panneau (8) de coffre, amovible, supporté par le plancher (26) du coffre (25) du véhicule automobile (V), dans lequel le plancher (26) comporte une cuvette (27) ménagée sous le plancher (26) dont l'ouverture (28), affleurant le plancher (26), débouche dans le coffre (25), ladite cuvette (27) contenant un haut-parleur (30) dont la membrane (31), s'étendant parallèlement au plan de l'ouverture (28) de la cuvette (27), est orientée vers l'ouverture (28) de la cuvette (27) en affleurant ladite ouverture (28), dans lequel ledit panneau (8) recouvre l'ouverture (28) de la cuvette (27), le panneau (8) comportant au moins une ouverture (10) s'étendant dans le plan du panneau (8) pour laisser passer le son au travers du panneau (8), et un ensemble de grille de protection (21, 22) intégré dans le panneau (8) fermant l'ouverture (10) ménagée dans le panneau (8) en regard de la membrane (31) du haut-parleur (30) avec un décalage déterminé et définissant une ouverture grillagée (10, 21, 22) ménagée dans le panneau (8), le véhicule (V) étant **caractérisé en ce que** la membrane (31) du haut-parleur (30) est disposée au voisinage d'un bord de la cuvette (27), et **en ce que** l'ouverture grillagée (10, 21, 22), ménagée dans le panneau (8), est disposée entre le bord (11) du panneau (8), adjacent au bord (32) de la cuvette (27), et la membrane (31) du haut-parleur (30), l'ensemble de grille comportant en outre une grille (21) et une contre-grille (22) en regard l'une de l'autre, et **en ce que** le bord extérieur (23) de la contre-grille (22) est rigide et fait office de renfort du bord (11) du panneau (8).

2. Panneau (8) de coffre (25) d'un véhicule automobile (V), ledit panneau (8) de coffre, lorsqu'il est disposé dans ledit véhicule (V), étant amovible et supporté par le plancher (26) du coffre (25) du véhicule automobile (V), dans lequel le plancher (26) comporte une cuvette (27) ménagée sous le plancher (26) dont l'ouverture (28), affleurant le plancher (26), débouche dans le coffre (25), ladite cuvette (27) contenant un haut-parleur (30) dont la membrane (31), s'étendant parallèlement au plan de l'ouverture (28) de la cuvette (27), est orientée vers l'ouverture (28) de la cuvette (27) en affleurant ladite ouverture (28), dans lequel ledit panneau (8) recouvre l'ouverture (28) de la cuvette (27), le panneau (8) comportant au moins une ouverture (10) s'étendant dans le plan du panneau (8) pour laisser passer le son au travers du panneau (8), et un ensemble de grille de protection (21, 22) intégré dans le panneau (8) fermant l'ouverture (10) ménagée dans le panneau (8), l'ouverture (10) définissant une ouverture grillagée (10, 21, 22) ménagée dans le panneau (8) et étant en regard de la membrane (31) du haut-parleur (30) avec un décalage déterminé lorsque ledit panneau (8) de coffre est disposé dans le véhicule (V), **caractérisé en ce qu'**il comporte un empilement de plaques assemblées les unes sur les autres, comportant, en partant de la plaque supérieure vers la plaque inférieure :
- une plaque (9) en matériau textile présentant une ouverture (10) au voisinage d'un (11) de ses bords latéraux ;
- un ensemble (12) de plaques de bois comportant une première plaque de bois (13) comportant une échancrure (14) en regard de l'ouverture (10) de la plaque (9) en matériau textile ; ladite échancrure (14) étant ouverte sur ledit bord latéral (11), et comportant une deuxième plaque de renfort en bois (15) entourant l'échancrure (14) ;
- une plaque (16) en matériau insonorisant comportant une échancrure (17) en regard de l'ouverture (10) de la plaque (9) en matériau textile en étant ouverte sur ledit bord latéral (11), et présentant une empreinte (18) correspondant à l'encombrement de la plaque de renfort (15) pour compenser la surépaisseur due à la plaque de renfort (15) dans l'empilement ; et
- une plaque (19) en matériau non tissé présentant une ouverture (20), en regard de l'ouverture (10) de la plaque (9) en matériau textile, au voisinage dudit bord latéral (11) ;
et **en ce qu'**il comporte un ensemble de grille comportant une grille (21) et une contre-grille (22) prenant en sandwich ledit bord latéral (11) de la plaque (9) en matériau textile et l'ensemble (12) de plaques de bois (13, 15) ; la grille (21) étant rapportée sur la contre-grille (22) et maintenue par des moyens de clipage (24) ; la contre-grille (22) fermant l'échancrure (14) de l'ensemble (12) de plaques de bois (13, 15) sur ledit bord latéral (11) pour assurer la rigidité sur ledit bord (11) qui est dépourvu de bois et assurer le soyage ; lesdits moyens de clipage (24) assurant la tenue mécanique de l'ensemble et le marquage du soyage dans la plaque (9) en matériau textile.

3. Procédé d'assemblage d'un panneau (8) de coffre selon la revendication 2, **caractérisé en ce qu'**il comporte les étapes suivantes :
- encollage de la face inférieure de la plaque (9) textile ;
- encollage de la face supérieure de la plaque (16) en matériau insonorisant ;
- pressage de l'empilement constitué, dans l'ordre, de la plaque (19) en matériau non tissé, de la plaque (16) en matériau insonorisant encollée, des plaques de bois (13, 15) et de la plaque (9) textile encollée, et découpe simultanée des contours des plaques en matériau non tissé (19) et textile (9) ainsi que l'ouverture (10) dans la plaque (9) de matériau textile ; et
- assemblage de la grille (21) sur la contre-grille (22) par clipage (24).

4. Procédé d'assemblage d'un panneau (8) de coffre selon la revendication 3, **caractérisé en ce qu'**il comporte les étapes suivantes :
- encollage de la face supérieure de l'ensemble (12) de plaques de bois (13, 15) ;
- compression de la face supérieure de l'ensemble (12) de plaques de bois (13, 15) sur la plaque (9) de textile avec marquage du soyage de la grille (21) ;
- encollage de la face inférieure de l'ensemble formé par les plaques de bois (13, 15) et la plaque (9) textile ; la face inférieure correspondant à la face inférieure de l'ensemble (12) de plaques de bois (13, 15) ;
- positionnement de la plaque (16) en matériau insonorisant sur la face inférieure de l'ensemble (12) de plaques de bois encollée (13, 15) ;
- pressage de la plaque (19) en matériau non tissé sur l'empilement de plaques précédent, et découpe simultanée des contours des plaques en matériau non tissé (19) et textile (9) ainsi que l'ouverture (10) dans la plaque (9) de matériau textile ; et
- assemblage de la grille (21) sur la contre-grille (22) par clipage (24).

## Patentansprüche

1. Kraftfahrzeug (V) mit einer vom Boden (26) des Kofferraums (25) des Kraftfahrzeugs (V) abgestützten, abnehmbaren Kofferraumplatte (8), wobei der Boden (26) eine unter dem Boden (26) ausgebildete Wanne (27) aufweist, deren mit dem Boden (26) fluchtende Öffnung (28) in den Kofferraum (25) mündet, wobei die Wanne (27) einen Lautsprecher (30) enthält, dessen Membran (31) parallel zur Ebene der Öffnung (2) verläuft 8) der Schale (27) zur Öffnung (28) der Schale (27) hin ausgerichtet ist, wobei die Öffnung (28) der Schale (27) bündig mit der Öffnung (28) ist, wobei die Platte (8) die Öffnung (28) der Schale (27) abdeckt, wobei die Platte (8) mindestens eine Öffnung (10) aufweist, die sich in der Ebene der Platte (8) erstreckt, um Schall durch die Platte (8) hindurchzulassen, und eine Schutzgitteranordnung (21, 22), die in der Platte (8) integriert ist, die die die die Öffnung (10) verschließt in der Platte (8) gegenüber der Membran (31) des Lautsprechers (30) mit einem bestimmten Versatz angeordnet ist und eine Gitteröffnung (10, 21, 22) in der Platte (8) definiert, wobei das Fahrzeug (V) **dadurch gekennzeichnet ist, dass** die Membran (31) des Lautsprechers (30) in der Nähe eines Randes der Wanne (27) angeordnet ist und dass die Gitteröffnung (10, 21, 22) in der Platte (8) zwischen dem Rand (11) angeordnet ist Platte (8), die an den Rand (32) der Schale (27) angrenzt, und die Membran (31) des Lautsprechers (30), wobei die Gitteranordnung ferner ein Gitter (21) und ein Gegengitter (22) aufweist, die einander gegenüberliegen, und dass der äußere Rand (23) des Gegengitters (22) starr ist und als Verstärkung des Randes (11) der Platte (8) dient.

2. Kofferraumplatte (8) eines Kraftfahrzeugs (V), wobei die Kofferraumplatte (8), wenn sie in dem Fahrzeug (V) angeordnet ist, abnehmbar ist und vom Boden (26) des Kofferraums (25) des Kraftfahrzeugs (V) getragen wird, wobei der Boden (26) eine unter dem Boden (26) angeordnete Wanne (27) aufweist, deren Öffnung (28), die mit dem Boden (26) fluchtet, in den Kofferraum (25) mündet, wobei die Wanne (27) einen oberen Behälter enthält Lautsprecher (30), dessen parallel zur Ebene der Öffnung (28) der Wanne (27) verlaufende Membran (31) der Öffnung (28) der Wanne (27) zugewandt ist, wobei die Öffnung (28) der Wanne (27) bündig mit der Öffnung (28) ist, wobei die Platte (8) die Öffnung (28) der Wanne (27) abdeckt, wobei die Platte (8) mindestens eine Öffnung (10) aufweist, die sich in der Ebene der Platte (8) erstreckt, um Schall durch die Platte (8) hindurchzulassen, und eine Gitteranordnung Schutz (21, 22), der in die Platte (8) integriert ist, die die Öffnung (10) in der Platte (8) verschließt, wobei die Öffnung (10) eine Gitteröffnung (10, 21, 22) in der Platte (8) definiert und der Membran (31) des Lautsprechers (30) mit einem bestimmten Versatz gegenüberliegt, wenn die Kofferraumplatte (8) im Fahrzeug (V) angeordnet ist, **dadurch gekennzeichnet, dass** sie einen Stapel von Platten umfasst, die miteinander verbunden sind und ausgehend von der oberen Platte zur unteren Platte Folgendes umfassen:
- eine Platte (9) aus Textilmaterial mit einer Öffnung (10) in der Nähe einer (11) ihrer Seitenränder;
- eine Holzplattenanordnung (12) mit einer ersten Holzplatte (13), die gegenüber der Öffnung (10) der Textilplatte (9) eine Aussparung (14) aufweist; die Aussparung (14) an der Seitenkante (11) offen ist und eine zweite hölzerne Verstärkungsplatte (15) aufweist, die die Aussparung (14) umgibt;
- eine Platte (16) aus schalldämmendem Material mit einer Aussparung (17) gegenüber der Öffnung (10) der Platte (9) aus Textilmaterial, die an der Seitenkante (11) offen ist, und mit einer Aussparung (18), die der Größe der Verstärkungsplatte (15) entspricht, um die durch die Verstärkungsplatte (15) im Stapel verursachte Überdicke auszugleichen; und
- eine Platte (19) aus Vliesmaterial mit einer Öffnung (20) gegenüber der Öffnung (10) der Platte (9) aus Textilmaterial in der Nähe der Seitenkante (11); und dass sie eine Gitteranordnung umfasst, die ein Gitter (21) und ein Gegengitter (22) umfasst, das den Seitenrand (11) der Platte (9) aus Textilmaterial und die Anordnung (12) von Holzplatten (13, 15) sandwichartig umschließt; Das Gitter (21) wird auf das Gegengitter (22) aufgesetzt und durch Clipmittel (24) gehalten. das Gegengitter (22), das die Aussparung (14) der Anordnung (12) von Holzplatten (13, 15) an der Seitenkante (11) verschließt, um die Steifigkeit an der holzfreien Kante (11) sicherzustellen und das Schleifen zu gewährleisten; Die Clipmittel (24) gewährleisten die mechanische Festigkeit der Einheit und die Markierung der Seide in der Platte (9) aus Textilmaterial.

3. Verfahren zum Zusammenbau einer Kofferraumplatte (8) nach Anspruch 2, **dadurch gekennzeichnet, dass** es die folgenden Schritte umfasst:
- Verkleben der Unterseite der Textilplatte (9);
- Verkleben der Oberseite der Platte (16) aus schalldämmendem Material;
- Pressen des Stapels, der in der Reihenfolge aus der Vliesstoffplatte (19), der Platte (16) aus geleimtem Schalldämpfungsmaterial, den Holzplatten (13, 15) und der geleimten Textilplatte (9) besteht, und gleichzeitiges Schneiden der Konturen der Platten aus Vliesmaterial (19) und Textilien (9) sowie der Öffnung (10) in der Textilmaterialplatte (9); und
- Verbinden des Gitters (21) mit dem Gegengitter (22) durch Klippen (24).

4. Verfahren zum Zusammenbau einer Kofferraumplatte (8) nach Anspruch 3, **dadurch gekennzeichnet, dass** es die folgenden Schritte umfasst:
- Beleimung der Oberseite der Gesamtheit (12) von Holzplatten (13, 15);
- Verpressen der Oberseite des Satzes (12) von Holzplatten (13, 15) auf die Textilplatte (9) mit Markierung der Abrundung des Gitters (21);
- Beleimung der Unterseite der aus den Holzplatten (13, 15) und der Textilplatte (9) bestehenden Einheit; die Unterseite, die der Unterseite des Satzes (12) von Holzplatten (13, 15) entspricht;
- Positionierung der Platte (16) aus schalldämmendem Material auf der Unterseite des Satzes (12) von verklebten Holzplatten (13, 15);
- Pressen der Platte (19) aus Vliesmaterial auf den vorhergehenden Plattenstapel und gleichzeitiges Schneiden der Konturen der Platten aus Vliesmaterial (19) und Textil (9) sowie der Öffnung (10) in der Platte (9) aus Textilmaterial; und
- Verbinden des Gitters (21) mit dem Gegengitter (22) durch Klippen (24).

## Claims

1. Motor vehicle (V) comprising a removable safe panel (8) supported by the floor (26) of the trunk (25) of the motor vehicle (V), in which the floor (26) includes a toilet (27) housed under the floor (26) whose opening (28), facing the floor (26), opens into the trunk (2) 5), said bowl (27) containing a loudspeaker (30) whose membrane (31), extending parallel to the plane of the opening (28) of the bowl (27), is oriented towards the opening (28) of the bowl (27) by hitting said opening (28), in which said panel (8) covers the opening (28) of the toilet (27), the panel (8) having at least one opening (10) extending in the plane of the panel (8) to let the sound pass through the panel (8), and a protective grid set (21, 22) integrated in the panel (8) closing the opening (10) housed in the panel (8) (30) next to the speaker membrane (31) with a specified offset and defining a meshed opening (10, 21, 22) in the panel (8), the vehicle (V) being **characterized in that** the speaker membrane (31) (30) is arranged in the vicinity of a edge of the basin (27), and **in that** the grilled opening (10, 21, 22), housed in the panel (8), is arranged between the edge (11) of the panel (8), adjacent to the edge (32) of the basin (27), and the membrane (31) of the loudspeaker (30), the grid set further comprising a grid (2) 1) and a counter-grid (22) facing each other, and **in that** the outer edge (23) of the counter-grid (22) is rigid and serves as a reinforcement of the edge (11) of the panel (8).

2. A trunk panel (8) (25) of a motor vehicle (V), said trunk panel (8), when disposed in said vehicle (V), being removable and supported by the floor (26) of the trunk (25) of the motor vehicle (V), wherein the floor (26) comprises a trough (27) formed under the floor (26), the opening (28) of which, flush with the floor (26), opens into the trunk (25), said trough (27) containing a loudspeaker (30) the diaphragm (31), extending parallel to the plane of the opening (28) of the bowl (27), is oriented towards the opening (28) of the bowl (27) by flush with said opening (28), wherein said panel (8) covers the opening (28) of the bowl (27), the panel (8) having at least one opening (10) extending in the plane of the panel (8) to allow sound to pass through the panel (8), and a protective grid assembly (21, 22) integrated in the panel (8) closing the opening (10) made in the panel (8), the opening (10) defining a mesh opening (10, 21, 22) made in the panel (8) and facing the membrane (31) of the loudspeaker (30) with a determined offset when said trunk panel (8) is arranged in the vehicle (V), **characterized in that** it comprises a stack of plates assembled on one another, comprising, starting from the upper plate towards the lower plate:
- a textile plate (9) having an opening (10) in the vicinity of one (11) of its side edges;
- a set (12) of wood plates comprising a first wood plate (13) having a notch (14) facing the opening (10) of the textile plate (9); the notch (14) being open on the side edge (11) and having a second wooden reinforcing plate (15) surrounding the notch (14);
- a plate (16) of sound-absorbing material having a notch (17) facing the opening (10) of the plate (9) of textile material being open on said lateral edge (11), and having a recess (18) corresponding to the size of the reinforcing plate (15) to compensate for the extra thickness due to the reinforcing plate (15) in the stack; and
- a plate (19) of non-woven material having an opening (20) facing the opening (10) of the plate (9) of textile material, in the vicinity of said lateral edge (11); and **in that** it comprises a grid assembly comprising a grid (21) and a counter-grid (22) sandwiching said lateral edge (11) of the textile plate (9) and the wooden plate assembly (12) (13, 15); the grid (21) being attached to the counter-grid (22) and held by clipping means (24); the counter-grid (22) closing the notch (14) of the set (12) of wood plates (13, 15) on the said lateral edge (11) to ensure rigidity on the said edge (11) which is devoid of wood and to ensure the ridging; said clipping means (24) ensure the mechanical strength of the assembly and the marking of the silk in the plate (9) made of textile material.

3. Method for assembling a trunk panel (8) according to claim 2, **characterized in that** it comprises the following steps:
- gluing of the underside of the textile plate (9);
- gluing of the top face of the plate (16) of sound-absorbing material;
- pressing of the stack consisting, in order, of the non-woven material plate (19), the glued sound-absorbing material plate (16), the wood plates (13, 15) and the glued textile plate (9), and simultaneously cutting the contours of the non-woven material (19) and textile (9) plates and the opening (10) in the textile material plate (9); and
- assembly of the grid (21) on the counter-grid (22) by clipping (24).

4. Method for assembling a trunk panel (8) according to claim 2, **characterized in that** it comprises the following steps:
- gluing of the upper face of the set (12) of wood plates (13, 15);
- compression of the upper face of the set (12) of wooden plates (13, 15) on the textile plate (9) with marking of the ridge of the grid (21);
- gluing of the underside of the assembly formed by the wooden plates (13, 15) and the textile plate (9); the underside corresponding to the underside of the set (12) of wood plates (13, 15);
- positioning of the soundproofing material plate (16) on the underside of the glued wood plate assembly (12) (13, 15);
- pressing the non-woven material plate (19) on the preceding plate stack, and simultaneously cutting the contours of the non-woven material (19) and textile (9) plates and the opening (10) in the textile material plate (9); and
- assembly of the grid (21) on the counter-grid (22) by clipping (24).
